(19) Europäisches Patentamt
European Patent Office
Office européen des brevets

(11) **EP 3 363 144 B1**

(12) **EUROPÄISCHE PATENTSCHRIFT**

(45) Veröffentlichungstag und Bekanntmachung des Hinweises auf die Patenterteilung:
**07.08.2019  Patentblatt 2019/32**

(21) Anmeldenummer: **16779088.0**

(22) Anmeldetag: **10.10.2016**

(51) Int Cl.:
***H04L 9/08*** (2006.01)

(86) Internationale Anmeldenummer:
**PCT/EP2016/074209**

(87) Internationale Veröffentlichungsnummer:
**WO 2017/063997 (20.04.2017 Gazette 2017/16)**

(54) **VERFAHREN UND VORRICHTUNG ZUM ETABLIEREN EINES GEMEINSAMEN GEHEIMNISSES**

METHOD AND APPARATUS FOR ESTABLISHING A COMMON SECRET

PROCÉDÉ ET DISPOSITIF PERMETTANT D'ÉTABLIR UN SECRET PARTAGÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2015  DE 102015219991**

(43) Veröffentlichungstag der Anmeldung:
**22.08.2018  Patentblatt 2018/34**

(73) Patentinhaber: **Robert Bosch GmbH**
**70442 Stuttgart (DE)**

(72) Erfinder:
• **KASPER, Bjoern**
**74379 Ingersheim (DE)**
• **LOTHSPEICH, Timo**
**71287 Weissach (DE)**
• **KELLER, Thomas**
**78628 Rottweil (DE)**
• **HORST, Christian**
**72144 Dusslingen (DE)**
• **HUCK, Thorsten**
**71711 Murr (DE)**
• **MUELLER, Andreas**
**71336 Waiblingen (DE)**
• **SCHWEPP, Thorsten**
**71404 Korb (DE)**

(56) Entgegenhaltungen:
**WO-A1-2005/004381    DE-A1-102012 215 326**

• **Anthony Van Herrewege ET AL: "CANAuth -A Simple, Backward Compatible Broadcast Authentication Protocol for CAN bus", ECRYPT Workshop on Lightweight Cryptography 2011, 1. Januar 2011 (2011-01-01), XP055329446, Gefunden im Internet: URL:https://www.esat.kuleuven.be/cosic/pub lications/article-2086.pdf [gefunden am 2016-12-15]**

**Beschreibung**

Die vorliegende Erfindung betrifft ein Verfahren zum Etablieren eines gemeinsamen Geheimnisses. Die vorliegende Erfindung betrifft darüber hinaus eine entsprechende Vorrichtung, ein entsprechendes Computerprogramm sowie ein entsprechendes Speichermedium. Dabei kommunizieren die beteiligten Knoten oder Teilnehmer über ein gemeinsam genutztes Übertragungsmedium. Hierbei werden logische Bitfolgen - bzw. allgemeiner: Wertfolgen - durch entsprechende Übertragungsverfahren als Signale bzw. Signalfolgen physikalisch übertragen.

Das zugrundeliegende Kommunikationssystem kann z. B. ein CAN-Bus sein. Dieser sieht eine Übertragung dominanter und rezessiver Bits bzw. entsprechend dominanter und rezessiver Signale vor, wobei sich ein dominantes Signal bzw. Bit eines Teilnehmers des Netzwerks gegen rezessive Signale bzw. Bits durchsetzt. Ein Zustand entsprechend dem rezessiven Signal stellt sich auf dem Übertragungsmedium nur ein, wenn alle beteiligten Teilnehmer ein rezessives Signal zur Übertragung vorsehen bzw. wenn alle gleichzeitig sendenden Teilnehmer einen rezessiven Signalpegel übertragen.

Stand der Technik

Eine sichere Kommunikation zwischen verschiedenen Geräten wird in einer zunehmend vernetzten Welt immer wichtiger und stellt in vielen Anwendungsbereichen eine wesentliche Voraussetzung für die Akzeptanz und somit auch den wirtschaftlichen Erfolg der entsprechenden Anwendungen dar. Dies umfasst - je nach Anwendung - verschiedene Schutzziele, wie beispielsweise die Wahrung der Vertraulichkeit der zu übertragenden Daten, die gegenseitige Authentifizierung der beteiligten Knoten oder die Sicherstellung der Datenintegrität.

Zur Erreichung dieser Schutzziele kommen üblicherweise geeignete kryptographische Verfahren zum Einsatz, die man generell in zwei verschiedene Kategorien unterteilen kann: zum einen symmetrische Verfahren, bei denen Sender und Empfänger über denselben kryptographischen Schlüssel verfügen, zum anderen asymmetrische Verfahren, bei denen der Sender die zu übertragenden Daten mit dem öffentlichen - d. h. auch einem potenziellen Angreifer möglicherweise bekannten - Schlüssel des Empfängers verschlüsselt, die Entschlüsselung aber nur mit dem zugehörigen privaten Schlüssel erfolgen kann, der idealerweise nur dem Empfänger bekannt ist.

Asymmetrische Verfahren haben unter anderem den Nachteil, dass sie in der Regel eine sehr hohe Rechenkomplexität aufweisen. Damit sind sie nur bedingt für ressourcenbeschränkte Knoten wie z. B. Sensoren, Aktuatoren o. ä. geeignet, die üblicherweise nur über eine relativ geringe Rechenleistung sowie geringen Speicher verfügen und energieeffizient arbeiten sollen, beispielsweise aufgrund von Batteriebetrieb oder dem Einsatz des sogenannten "Energy Harvesting". Darüber hinaus steht oftmals nur eine begrenzte Bandbreite zur Datenübertragung zur Verfügung, was den Austausch von asymmetrischen Schlüsseln mit Längen von 2048 Bit oder noch mehr unattraktiv macht.

Bei symmetrischen Verfahren hingegen muss gewährleistet sein, dass sowohl Empfänger als auch Sender über den gleichen Schlüssel verfügen. Das zugehörige Schlüsselmanagement stellt dabei generell eine sehr anspruchsvolle Aufgabe dar. Im Bereich des Mobilfunks werden Schlüssel beispielsweise mit Hilfe von SIM-Karten in ein Mobiltelefon eingebracht und das zugehörige Netz kann dann der eindeutigen Kennung einer SIM-Karte den entsprechenden Schlüssel zuordnen. Im Fall eines drahtlosen lokalen Netzwerks (*wireless local area network*, WLAN) hingegen erfolgt üblicherweise eine manuelle Eingabe der zu verwendenden Schlüssel - in der Regel durch die Eingabe eines Passwortes - bei der Einrichtung des Netzwerkes. Ein solches Schlüsselmanagement wird allerdings schnell sehr aufwändig und impraktikabel, wenn man eine sehr große Anzahl von Knoten hat, beispielsweise in einem Sensornetzwerk oder anderen Maschine-zu-Maschine-Kommunikationssystemen, z. B. CAN-basierten Fahrzeugnetzwerken. Darüber hinaus ist eine Änderung der zu verwendenden Schlüssel - etwa im Rahmen einer regelmäßigen Neuberechnung oder "Auffrischung" (*re-keying*) - oftmals überhaupt nicht bzw. nur mit sehr großem Aufwand möglich.

DE 10 2012 215326 A1 beschreibt ein Verfahren zur Erzeugung eines kryptografischen Schlüssels in einem Netzwerk mit einem ersten Netzwerkelement, einem zweiten Netzwerkelement und einem Netzwerkknoten, wobei das erste Netzwerkelement über einen ersten Übertragungskanal und das zweite Netzwerkelement über einen zweiten Übertragungskanal mit dem Netzwerkknoten kommunizieren kann. Das Verfahren umfasst aufseiten des ersten Netzwerkelements einen Schritt des Bestimmens einer ersten Kanalinformation bezüglich des ersten Übertragungskanals basierend auf einem von dem Netzwerkknoten ausgesendeten ersten Pilotsignal und einen Schritt des Ermittelns des symmetrischen kryptografischen Schlüssels unter Verwendung der ersten Kanalinformation und einer Information über eine kombinierte Kanalinformation, wobei die kombinierte Kanalinformation eine seitens des Netzwerkknotens basierend auf einem von dem ersten Netzwerkelement zu dem Netzwerknoten übertragenen zweiten Pilotsignal und einem von dem zweiten Netzwerkelement zu dem Netzwerknoten übertragenen dritten Pilotsignal bestimmte Kombination von Übertragungscharakteristiken des ersten und des zweiten Übertragungskanals repräsentiert.

Offenbarung der Erfindung

Die Erfindung stellt ein Verfahren zum Etablieren eines gemeinsamen Geheimnisses, eine entsprechende Vorrichtung, ein entsprechendes Computerprogramm sowie ein entsprechendes Speichermedium gemäß den unabhängigen Ansprüchen bereit.

Das oben genannte Verfahren beschreibt die Generierung und Verteilung von gemeinsamen Geheimnissen zwischen zwei Kommunikationspartnern. Ein Vorzug der vorgeschlagenen Lösung liegt demgegenüber in ihrer erweiterten praktischen Anwendbarkeit. Hierzu werden Mechanismen zur Etablierung eines gemeinsamen Geheimnisses zwischen mehr als zwei Kommunikationspartnern beschrieben (im Folgenden Gruppenschlüssel genannt). Mit Gruppenschlüsseln können zum Beispiel Mehrpunktverbindungen wie Multicast oder Broadcast abgesichert werden.

Das gemeinsame Geheimnis kann unter Umständen direkt als kryptografischer Schlüssel genutzt werden. Alternativ wird das gemeinsame Geheimnis jedoch weiter verarbeitet, um aus dem gemeinsamen Geheimnis einen kryptografischen Schlüssel zwischen mehr als zwei Kommunikationspartnern abzuleiten.

Durch die in den abhängigen Ansprüchen aufgeführten Maßnahmen sind vorteilhafte Weiterbildungen und Verbesserungen des im unabhängigen Anspruch angegebenen Grundgedankens möglich. So kann der erste Knoten die erste Bitfolge zufällig bestimmen, während die zweite Bitfolge einen dem zweiten Knoten und dem dritten Knoten vorbekannten Ausgangswert darstellt. In diesem Fall detektiert der dritte Knoten synchron zu dem ersten Knoten und dem zweiten Knoten die dritte Bitfolge und die vierte Bitfolge, verknüpft diese seinerseits zu der fünften Bitfolge und ermittelt das erste Geheimnis, indem er entsprechende Bits der zweiten Bitfolge streicht, welche gemäß der fünften Bitfolge ziffernwertmäßig übereinstimmen. Der erste Knoten, der zweite Knoten und der dritte Knoten können das erste Geheimnis so unmittelbar als gemeinsames Geheimnis verwenden. Der erste Knoten, der die Zufallszahl sendet, muss den gemeinsamen Ausgangswert nicht kennen.

In einer bevorzugten Ausführungsform kann der Ausgangswert z. B. in allen Steuergeräten eines Herstellers oder Erstausrüsters derselbe sein. Nach Anwendung des Verfahrens gemäß dieser Ausführungsform erhält man fahrzeugspezifische Geheimnisse.

Kurze Beschreibung der Zeichnungen

Ausführungsbeispiele der Erfindung sind in den Zeichnungen dargestellt und in der nachfolgenden Beschreibung näher erläutert. Es zeigt:

Figur 1 den Ausgangszustand eines ersten Verfahrens gemäß einer Ausführungsform der Erfindung.

Figur 2 den Austausch des gemeinsamen Geheimnisses nach dem ersten Verfahren.

Figur 3 den Endzustand des ersten Verfahrens.

Figur 4 den Austausch des gemeinsamen Geheimnisses nach einem zweiten Verfahren.

Figur 5 den Ausgangszustand eines dritten Verfahrens.

Figur 6 den Ausgangszustand eines vierten Verfahrens.

Figur 7 den Austausch des gemeinsamen Geheimnisses nach dem vierten Verfahren.

Figur 8 den Endzustand des vierten Verfahrens.

Figur 9 den Austausch des gemeinsamen Geheimnisses nach einem fünften Verfahren.

Ausführungsformen der Erfindung

Ausführungsformen der vorliegenden Erfindung basieren darauf, dass entweder Geheimnisse, die mittels eines im Weiteren beschriebenen Verfahrens paarweise ausgetauscht wurden, als Basis für die Etablierung eines gemeinsamen Geheimnisses dienen oder das gemeinsame Geheimnis selbst über das beschriebene Verfahren zwischen mehreren Teilnehmern ausgetauscht wird.

Es sei darauf hingewiesen, dass die nachfolgenden Beschreibungen exemplarisch zeigen, dass ein gemeinsames Geheimnis für alle am Kommunikationssystem befindlichen Kommunikationsteilnehmer etabliert wird. Dies ist nur als ein Beispiel zu verstehen. Es wäre auch möglich, dass zur Gruppe nur ein Teil der Kommunikationsteilnehmer hinzugehören und auch nur diese das gemeinsame Geheimnis kennen. Ebenso ist es mittels der beschriebenen Mechanismen möglich, mehrere gemeinsame Geheimnisse für verschiedene, aber auch für gleiche Gruppen zu etablieren. Letzteres ist ggf. vorteilhaft, falls unterschiedliche Informationen in unterschiedlichen CAN-Rahmen bspw. Drehmomentanforderungen und aktuelle Geschwindigkeit mit unterschiedlichen gemeinsamen Geheimnissen abgesichert werden sollen.

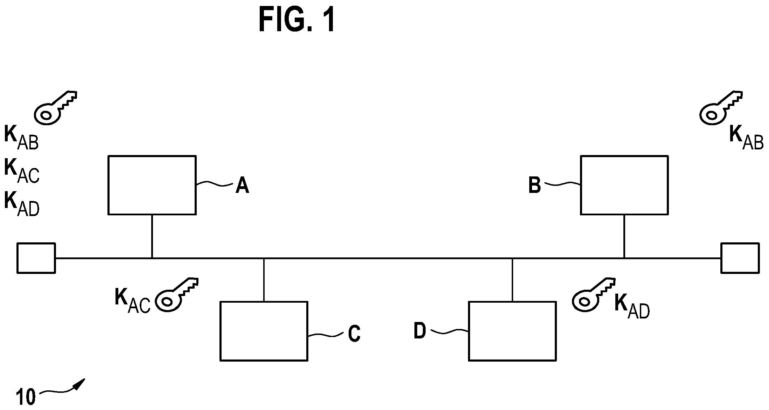

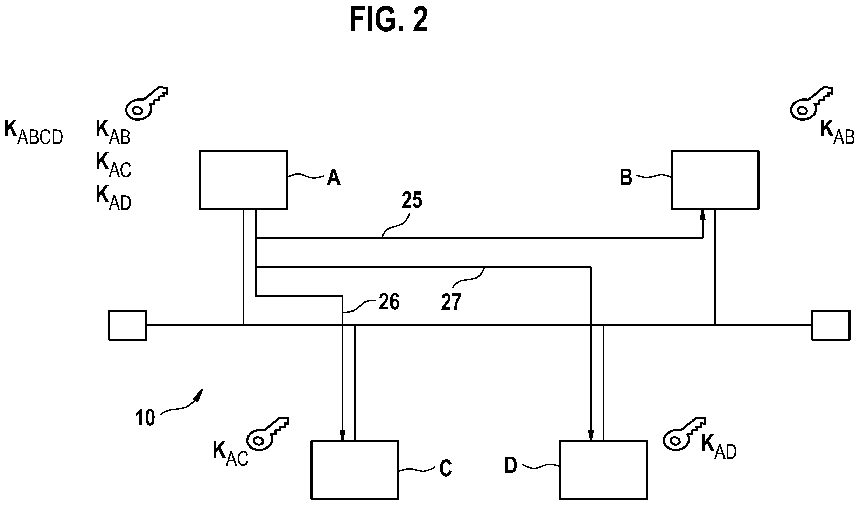

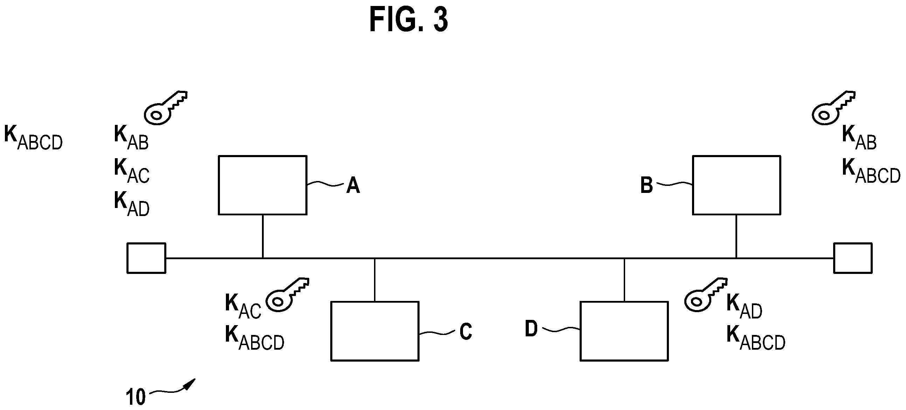

In den Ausführungsformen der Figuren 1 bis 5 sind ein erster Knoten A, ein zweiter Knoten B, ein dritter Knoten C sowie ein vierter Knoten D am selben Bus-Segment 10 angebunden, welches als gemeinsam genutztes Medium die Knoten A - D zu einem Kommunikationssystem 10, A - D verbindet. Der erste Knoten A tauscht mit dem zweiten Knoten B, dem dritten Knoten C sowie dem vierten Knoten D zunächst ein paarweises Geheimnis mit einem erfindungsgemäßen Verfahren aus. Dieses Verfahren wird - stellvertretend für alle drei Knotenpaare A-B, A-C, A-D - anhand des ersten Knotens A und des zweiten Knotens B beschrieben:

Sowohl der erste Knoten A als auch der zweite Knoten B generieren in einem ersten Schritt zunächst lokal - d. h. intern und voneinander unabhängig - eine Bitsequenz oder Bitfolge (*bitstring*). Die Bitfolge wird vorzugsweise jeweils als zufällige oder pseudozufällige Bitabfolge, beispielsweise mit Hilfe eines geeigneten Zufallszahlengenerators oder Pseudozufallszahlengenerators, vorzugsweise eines kryptographisch sicheren Pseudozufallszahlengenerators erzeugt. Beispielsweise könnte der erste Knoten A die Bitfolge

$$S_{\mathrm{A}} = (0,1,0,0,1,1,0,1,1,1,0,0,1,0,1,1,0,0,1,0)$$

und der zweite Knoten B die Bitfolge

$$S_{\mathrm{B}} = (1,0,0,1,0,0,0,1,1,0,1,1,0,1,0,0,1,0,1,1)$$

erzeugen.

In einem zweiten Schritt übertragen der erste Knoten A und der zweite Knoten B zueinander weitgehend synchron ihre jeweils erzeugten Bitsequenzen über das Übertragungsmedium 10 unter Verwendung des Übertragungsverfahrens mit dominanten und rezessiven Bits. Dabei sind verschiedene Möglichkeiten zur Synchronisierung der entsprechenden Übertragungen denkbar. So könnte beispielsweise entweder der erste Knoten A oder der zweite Knoten B zunächst eine geeignete Synchronisationsnachricht an den jeweils anderen Knoten B, A senden und nach einer bestimmten Zeitdauer im Anschluss an die vollständige Übertragung dieser Nachricht dann die Übertragung der eigentlichen Bitsequenzen starten. Genauso ist es aber auch denkbar, dass von einem der beiden Knoten A, B nur ein geeigneter Nachrichtenkopf (*header*) übertragen wird - z. B. ein CAN-Header bestehend aus Arbitrierungsfeld und Kontrollfeld - und während der zugehörigen Nutzdatenphase dann beide Knoten A, B gleichzeitig ihre generierten Bitsequenzen weitgehend synchron übermitteln. In einer Variante der Prozedur können die im ersten Schritt generierten Bitsequenzen des ersten Knotens A oder des zweiten Knotens B auch auf mehrere Nachrichten verteilt übertragen werden, beispielsweise wenn dies die Maximal-Größen der entsprechenden Nachrichten erforderlich machen. Auch in dieser Variante erfolgt die Übertragung der auf entsprechend viele, entsprechend große Nachrichten verteilten Bitsequenzen des jeweils anderen Knotens B, A wiederum weitgehend synchron.

Auf dem Übertragungsmedium 10 überlagern sich die beiden Bitsequenzen dann, wobei aufgrund der zuvor geforderten Eigenschaft des Systems mit der Unterscheidung von dominanten und rezessiven Bits die einzelnen Bits des ersten Knotens A und des zweiten Knotens B eine Überlagerung ergeben, im genannten Beispiel de facto UND-verknüpft werden. Damit ergibt sich auf dem Übertragungskanal eine entsprechende Überlagerung, die beispielsweise der mithörende dritte Knoten C detektieren könnte. Als Beispiel einer Überlagerungsbitfolge für die obigen lokalen Bitfolgen könnte sich auf dem Übertragungskanal die folgende effektive Bitsequenz ergeben:

$$S_{\mathrm{eff}} = S_{\mathrm{A}} \wedge S_{\mathrm{B}} = (0,0,0,0,0,0,0,1,1,0,0,0,0,0,0,0,0,0,1,0)$$

Sowohl der erste Knoten A als auch der zweite Knoten B detektieren während der Übertragung ihrer Bitsequenzen des zweiten Schritts in einem parallelen dritten Schritt die effektiven überlagerten Bitsequenzen auf dem geteilten Übertragungsmedium 10. Für das Beispiel des CAN-Busses wird dies auch in konventionellen Systemen während der Arbitrierungsphase gewöhnlich ohnehin gemacht.

In einem vierten Schritt übertragen sowohl der erste Knoten A als auch der zweite Knoten B ebenfalls wieder weitgehend synchron ihre initialen Bitsequenzen, diesmal allerdings invertiert. Die Synchronisierung der entsprechenden Übertragungen kann dabei wieder genau auf dieselbe Art und Weise realisiert werden wie oben beschrieben. Auf dem geteilten Kommunikationsmedium werden die beiden Sequenzen dann wieder miteinander UND-verknüpft. Der erste Knoten A und der zweite Knoten B ermitteln wiederum die effektiven, überlagerten Bitsequenzen $S_{eff}$ auf dem geteilten Übertragungsmedium 10. Für den ersten Knoten A würde sich somit die invertierte Bitsequenz

$$\overline{S_{A}} = (1,0,1,1,0,0,1,0,0,0,1,1,0,1,0,0,1,1,0,1)$$

und für den zweiten Knoten B die invertierte Bitsequenz

$$\overline{S_{B}} = (0,1,1,0,1,1,1,0,0,1,0,0,1,0,1,1,0,1,0,0)$$

ergeben. Somit würden die Knoten A, B die folgende effektive, überlagerte Bitsequenz auf dem Kanal ermitteln:

$$S'_{eff} = \overline{S_{A}} \wedge \overline{S_{B}} = (0,0,1,0,0,0,1,0,0,0,0,0,0,0,0,0,0,1,0,0)$$

Sowohl der erste Knoten A als auch der zweite Knoten B ermitteln während der Übertragung ihrer nun invertierten Bitsequenzen dann wieder die effektiven, überlagerten Bitsequenzen auf dem geteilten Übertragungsmedium 10. Zu diesem Zeitpunkt kennen somit der erste Knoten A, der zweite Knoten B sowie auch ein möglicher Angreifer, der die Kommunikation auf dem geteilten Übertragungsmedium 10 mithört, die effektiven, überlagerten Bitsequenzen $S_{eff}$ und $S'_{eff}$. Im Gegensatz zum Angreifer kennt aber der erste Knoten A noch seine initial erzeugte, lokale Bitsequenz und der zweite Knoten B dessen initial erzeugte, lokale Bitsequenz. Der erste Knoten A wiederum kennt aber nicht die initial erzeugte, lokale Bitsequenz des zweiten Knotens B und der zweite Knoten B nicht die initial erzeugte, lokale Bitsequenz des ersten Knotens A. Die Detektion der Überlagerungsbitfolge erfolgt wiederum während der Übertragung in einem fünften Schritt.

Alternativ zu dieser beispielhaften Ausführungsvariante können der erste Knoten A und der zweite Knoten B ihre invertierte, lokale Bitfolge auch direkt mit bzw. direkt nach ihrer ursprünglichen, lokalen Bitfolge versenden, d. h. der vierte Schritt und der fünfte Schritt erfolgen mit zweiten und dritten Schritten. Die ursprüngliche und die invertierte Bitfolge können dabei in einer Nachricht, aber auch in separaten Nachrichten als Teil-Bitfolgen übermittelt werden. In einer besonders vorteilhaften Ausgestaltung lässt sich auch hinter einem Zufallsbit direkt das invertierte Zufallsbit senden.

In einem sechsten Schritt verknüpfen der erste Knoten A und der zweite Knoten B nun jeweils lokal - also intern - die effektiven, überlagerten Bitfolgen $S_{eff}$ und $S'_{eff}$, insbesondere mit einer logischen ODER-Funktion. Im obigen Beispiel ergäbe sich auf diesem Wege die folgende Verknüpfung:

$$S_{ges} = S_{eff} \vee S'_{eff} = (0,0,1,0,0,0,1,1,1,0,0,0,0,0,0,0,0,1,1,0)$$

Die einzelnen Bits in der aus der ODER-Verknüpfung resultierenden Bitsequenz $S_{ges}$ geben nun an, ob die entsprechenden Bits von $S_1$ und $S_2$ identisch oder unterschiedlich sind. Der erste Knoten A und der zweite Knoten B streichen daraufhin in einem siebten Schritt basierend auf der aus der ODER-Verknüpfung erhaltenen Bitsequenz in ihren ursprünglichen, initialen Bitsequenzen alle Bits, die in beiden Sequenzen identisch sind. Dies führt folglich zu entsprechend verkürzten Bitsequenzen

$$S_{A_v} = (0,1,0,1,1,1,0,0,1,0,1,1,0,0) \text{ und } S_{B_v} = (1,0,1,0,0,0,1,1,0,1,0,0,1,1).$$

Die resultierenden, verkürzten Bitsequenzen $S_{A_v}$ und $S_{B_v}$ sind nun gerade invers zueinander. Somit können der erste Knoten A und der zweite Knoten B durch Inversion ihrer verkürzten Bitsequenz exakt diejenige verkürzte Bitsequenz ermitteln, welche im jeweils anderen Knoten B, A bereits vorliegt.

In einer oder mehreren Runden wird so eine vorgegebene Anzahl $J$ von gemeinsamen geheimen Bits mittels einer öffentlichen Diskussion beim ersten Knoten A und zweiten Knoten B etabliert, die im Weiteren als $K_{AB}$, beim ersten Knoten A und dritten Knoten C als $K_{AC}$, und beim ersten Knoten A und vierten Knoten D als $K_{AD}$ bezeichnet wird. Hierbei ist zu beachten, dass die Anzahl der generierbaren geheimen Bits bei dem oben beschriebenen Verfahren in jeder Runde variieren kann. Dementsprechend müssen genügend viele Runden durchlaufen werden, um mindestens $J$ gemeinsame geheime Bits zu erhalten. Sollte die Anzahl der tatsächlich generierten geheimen Bits dann größer als $J$ sein, sind wiederum verschiedene Optionen denkbar: Der gewonnene Bitstring wird auf genau $J$ Bits gekürzt, z. B. durch das Streichen einzelner Bits oder allgemeiner mit Hilfe einer geeigneten Funktion, die den gewonnenen Bitstring auf einen verkürzten Bitstring der Länge $J$ abbildet, oder es wird einfach mit dem tatsächlich gewonnenen Bitstring einer $J$ überschreitenden Länge weitergearbeitet, auch wenn diese Länge jedes Mal unterschiedlich sein kann.

Der erste Knoten A generiert sich ein Geheimnis $K_{ABCD}$ und schickt diesen verschlüsselt (Bezugzeichen 25, 26, 27) mit dem jeweiligen paarweisen Geheimnis an die anderen, zur Gruppe dazugehörenden Teilnehmer, wie in den Figuren 1 bis 3 gezeigt.

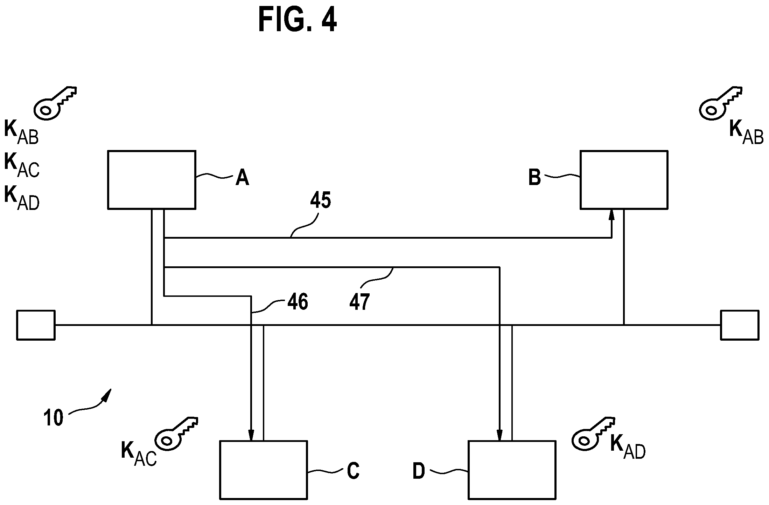

Eine Alternative wird durch Figur 4 illustriert: Der erste Knoten A generiert sich ein Geheimnis. Der erste Knoten A berechnet das Exklusiv-Oder des Geheimnisses mit dem jeweiligen paarweisen Geheimnis und schickt das Ergebnis (Bezugzeichen 45, 46, 47) an die anderen, zur Gruppe dazugehörenden Teilnehmer. Die anderen Teilnehmer berechnen das Exklusiv-Oder des Ergebnisses mit Ihrem paarweisen Geheimnis und erhalten das gemeinsame Geheimnis $K_{ABCD}$.

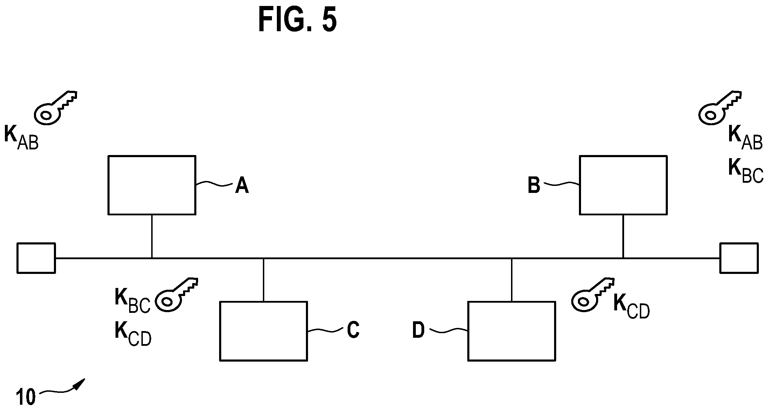

Die beschriebenen Verfahren können entsprechend für weitere Verteilungen bereits etablierter kryptografischer Geheimnisse angewandt werden, z. B. jene der Figur 5: Der erste Knoten A hat hier mit dem zweiten Knoten B ein paarweises Geheimnis. Der zweite Knoten B hat mit dem dritten Knoten C ein paarweises Geheimnis. Der dritte Knoten C hat mit dem vierten Knoten D ein paarweises Geheimnis. Der erste Knoten A generiert das gemeinsame Geheimnis $K_{ABCD}$ und schickt es an den zweiten Knoten B. Der zweite Knoten B verteilt das gemeinsame Geheimnis $K_{ABCD}$ an den dritten Knoten C weiter. Der dritte Knoten C verteilt das gemeinsame Geheimnis $K_{ABCD}$ an den vierten Knoten D weiter. Das gemeinsame Geheimnis $K_{ABCD}$ wird dabei wiederum jeweils mit dem paarweisen Geheimnis verschlüsselt.

In einem anderen Beispiel hat der erste Knoten A mit dem zweiten Knoten B ein paarweises Geheimnis. Der zweite Knoten B hat jeweils mit dem dritten Knoten C und dem vierten Knoten D ein paarweises Geheimnis. Der erste Knoten A generiert das gemeinsame Geheimnis $K_{ABCD}$ und schickt es wiederum verschlüsselt an den zweiten Knoten B. Der zweite Knoten B verteilt das gemeinsame Geheimnis $K_{ABCD}$ wiederum verschlüsselt an den dritten Knoten C und den vierten Knoten D weiter.

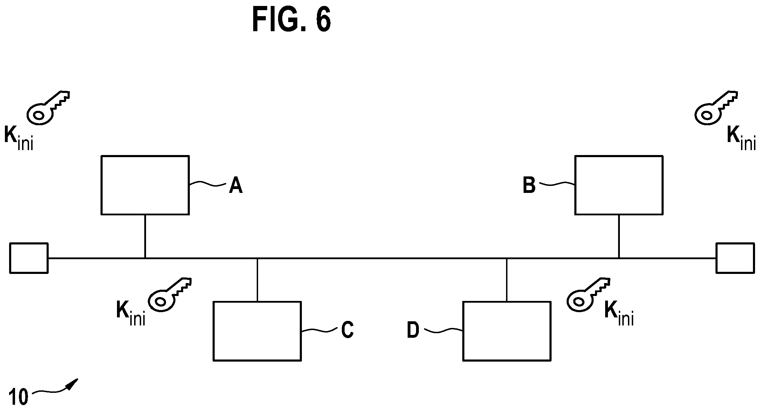

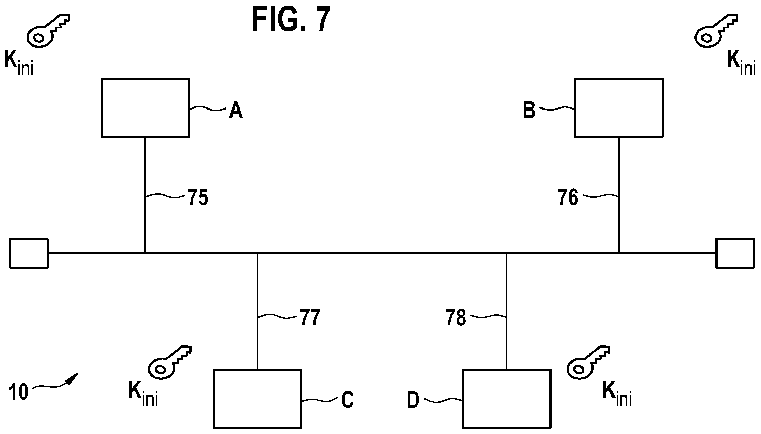

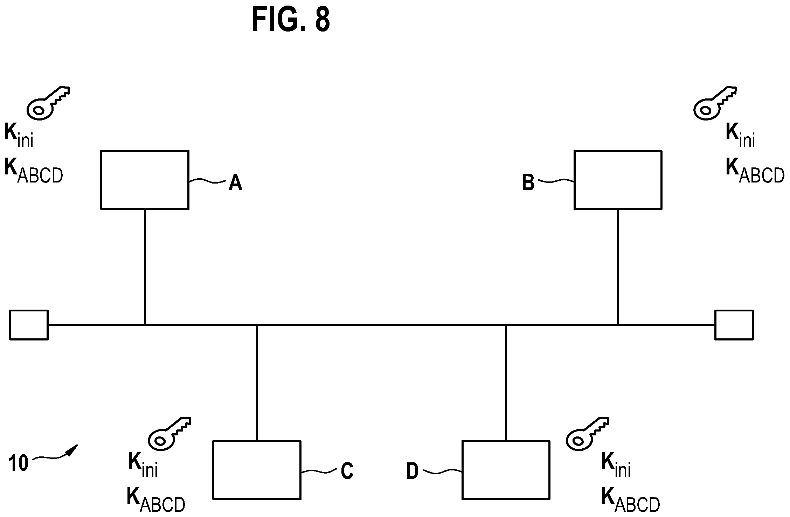

Auch in den Ausführungsformen der Figuren 6 bis 9 sind ein erster Knoten A, ein zweiter Knoten B, ein dritter Knoten C sowie ein vierter Knoten D am selben Bus-Segment 10 angebunden, welches als gemeinsam genutztes Medium 10 die Knoten A - D zu einem Kommunikationssystem 10, A - D verbindet. Die Knoten A - D kennen initial einen gemeinsamen Ausgangswert $K_{ini}$. Ein Teilnehmer am Bus 10 legt gemäß dem oben beschriebenen Verfahren seine Zufallszahl auf den Bus 10, mindestens ein oder mehrere der anderen Teilnehmer legen den Ausgangswert auf den Bus 10. Weitere Teilnehmer können am Bus 10 mithören. Der Teilnehmer, der die Zufallszahl auf den Bus 10 legt, die Teilnehmer, die den Ausgangswert auf den Bus 10 legen und die Teilnehmer, die mithören und den Ausgangswert $K_{ini}$ kennen, erhalten das gemeinsame Geheimnis $K_{ABCD}$.

In dem in den Figuren 6 bis 8 beleuchteten Beispiel generiert der erste Knoten A sich eine Zufallszahl und legt diese (Bezugzeichen 75) gemäß dem oben beschriebenen Verfahren auf den Bus 10. Der zweite Knoten B, der dritte Knoten C und der vierte Knoten D legen (Bezugzeichen 76, 77, 78) den gemeinsamen Ausgangswert $K_{ini}$ auf den Bus 10. Mit dem oben beschriebenen Verfahren erhalten alle ein gemeinsames Geheimnis; dieses kann als Gruppenschlüssel $K_{ABCD}$ verwendet werden. Auf $K_{ABCD}$ kann dabei durch eine geeignete Verknüpfung der zurückgelesenen Information mit $K_{ini}$ oder erneute Erzeugung einer Überlagerung mit der invertierten Bitsequenz (analog zu den Beispielen zuvor) geschlossen werden. Im letzteren Fall ist es nicht erforderlich, dass der Knoten, der die Zufallszahl erzeugt, $K_{ini}$ kennt.

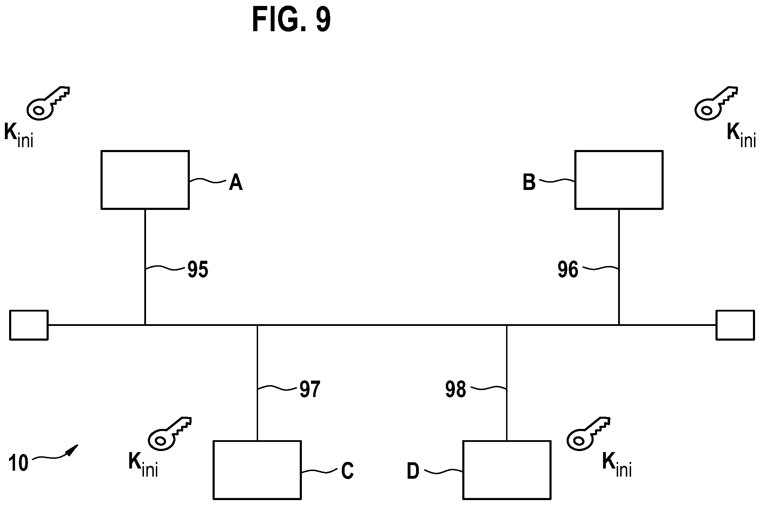

Eine Alternative wird in Figur 9 wiedergegeben: Der erste Knoten A generiert sich eine Zufallszahl und legt diese (Bezugzeichen 95) gemäß dem oben beschriebenen Verfahren auf den Bus 10. Der zweite Knoten B legt (Bezugzeichen 96) den gemeinsamen Ausgangswert $K_{ini}$ auf den Bus 10. Der dritte Knoten C und der vierte Knoten D hören mit (Bezugzeichen 97, 98). Wie oben erhalten alle ein gemeinsames Geheimnis; dieses kann als Gruppenschlüssel $K_{ABCD}$ verwendet werden.

Diese Verfahrensweise kann entsprechend in anderen Kombinationen und Verteilungen angewandt werden und beispielsweise in Software oder Hardware oder in einer Mischform aus Software und Hardware beispielsweise in einem Steuergerät implementiert sein.

**Patentansprüche**

**1.** Verfahren zum Etablieren eines gemeinsamen Geheimnisses ($K_{ABCD}$) in einem Kommunikationssystem (10, A - D) mit einem ersten Knoten (A), einem zweiten Knoten (B), einem dritten Knoten (C) und einem von den Knoten gemeinsam genutzten Medium (10),
**gekennzeichnet durch** folgende Merkmale:

- in einer ersten Arbitrierungsphase sendet (75, 95) der erste Knoten (A) eine erste Bitfolge, der zweite Knoten (B) sendet (76, 96) eine zweite Bitfolge und der erste Knoten (A) und der zweite Knoten (B) detektieren synchron eine effektive dritte Bitfolge, zu welcher sich die erste Bitfolge und die zweite Bitfolge auf dem Medium (10) stellenweise überlagern,

- in einer zweiten Arbitrierungsphase sendet der erste Knoten (A) die erste Bitfolge stellenweise invertiert, der zweite Knoten (B) sendet die zweite Bitfolge stellenweise invertiert und der erste Knoten (A) und der zweite Knoten (B) detektieren synchron eine effektive vierte Bitfolge, zu welcher sich die invertierte erste Bitfolge und die invertierte zweite Bitfolge überlagern,

- der erste Knoten (A) und der zweite Knoten (B) verknüpfen die dritte Bitfolge stellenweise disjunktiv mit der vierten Bitfolge zu einer fünften Bitfolge und

- der erste Knoten (A) und der zweite Knoten (B) ermitteln ein erstes Geheimnis ($K_{AB}$), indem der erste Knoten (A) Bits der ersten Bitfolge und der zweite Knoten (B) entsprechende Bits der zweiten Bitfolge streicht, welche gemäß der fünften Bitfolge ziffernwertmäßig übereinstimmen.

2. Verfahren nach Anspruch 1,
   **gekennzeichnet durch** folgende Merkmale:

   - der erste Knoten (A) generiert das gemeinsame Geheimnis ($K_{ABCD}$),
   - der erste Knoten (A) kodiert (25, 45) das gemeinsame Geheimnis ($K_{ABCD}$) mit dem ersten Geheimnis und schickt das kodierte (25, 45) gemeinsame Geheimnis ($K_{ABCD}$) an den zweiten Knoten (B) und
   - der zweite Knoten (B) dekodiert das gemeinsame Geheimnis ($K_{ABCD}$) mit dem ersten Geheimnis ($K_{AB}$).

3. Verfahren nach Anspruch 2,
   **gekennzeichnet durch** mindestens eines der folgenden Merkmale:

   - das gemeinsame Geheimnis ($K_{ABCD}$) wird durch ein symmetrisches Verschlüsselungsverfahren (25) mit dem ersten Geheimnis ($K_{AB}$) kodiert (25, 45) und dekodiert oder
   - das gemeinsame Geheimnis ($K_{ABCD}$) wird kodiert (25, 45) und dekodiert, indem das gemeinsame Geheimnis ($K_{ABCD}$) mit dem ersten Geheimnis ($K_{AB}$) antivalent verknüpft (45) wird.

4. Verfahren nach Anspruch 2 oder 3,
   **gekennzeichnet durch** folgende Merkmale:

   - der erste Knoten (A) und der dritte Knoten (C) ermitteln entsprechend ein zweites Geheimnis ($K_{AC}$),
   - der erste Knoten (A) kodiert (26, 46) das gemeinsame Geheimnis ($K_{ABCD}$) ferner mit dem zweiten Geheimnis ($K_{AC}$) und schickt das kodierte (26, 46) gemeinsame Geheimnis ($K_{ABCD}$) an den dritten Knoten (C) und
   - der dritte Knoten (C) dekodiert das gemeinsame Geheimnis ($K_{ABCD}$) mit dem zweiten Geheimnis ($K_{AC}$).

5. Verfahren nach Anspruch 2 oder 3,
   **gekennzeichnet durch** folgende Merkmale:

   - der zweite Knoten (B) und der dritte Knoten (C) ermitteln entsprechend ein zweites Geheimnis ($K_{BC}$),
   - der zweite Knoten (B) kodiert den mit dem ersten Geheimnis ($K_{AB}$) dekodierten gemeinsamen Geheimnis ($K_{ABCD}$) erneut mit dem zweiten Geheimnis ($K_{BC}$) und schickt das kodierte gemeinsame Geheimnis ($K_{ABCD}$) an den dritten Knoten (C) und
   - der dritte Knoten (C) dekodiert den Gruppenschlüssel ($K_{ABCD}$) mit dem zweiten Geheimnis ($K_{BC}$).

6. Verfahren nach Anspruch 1,
   **gekennzeichnet durch** folgende Merkmale:

   - der erste Knoten (A) bestimmt die erste Bitfolge zufällig,
   - die zweite Bitfolge stellt einen dem zweiten Knoten (B) und dem dritten Knoten (C) vorbekannten Ausgangswert ($K_{ini}$ dar,
   - der dritte Knoten (C) detektiert synchron zu dem ersten Knoten (A) und dem zweiten Knoten (B) die dritte Bitfolge und die vierte Bitfolge, verknüpft diese seinerseits zu der fünften Bitfolge und ermittelt das erste Geheimnis ($K_{AB}$), indem er entsprechende Bits der zweiten Bitfolge streicht, welche gemäß der fünften Bitfolge ziffernwertmäßig übereinstimmen und
   - der erste Knoten (A), der zweite Knoten (B) und der dritte Knoten (C) verwenden das erste Geheimnis ($K_{AB}$) als gemeinsames Geheimnis ($K_{ABCD}$).

**7.** Verfahren nach Anspruch 6,
**gekennzeichnet durch** folgendes Merkmal:

- auch der dritte Knoten (C) sendet (77) die zweite Bitfolge.

**8.** Computerprogramm, welches eingerichtet ist, das Verfahren nach einem der Ansprüche 1 bis 7 auszuführen.

**9.** Maschinenlesbares Speichermedium, auf dem das Computerprogramm nach Anspruch 8 gespeichert ist.

**10.** Vorrichtung (A, B, C, D), die eingerichtet ist, das Verfahren nach einem der Ansprüche 1 bis 7 auszuführen.


**Claims**

**1.** Method for setting up a shared secret ($K_{ABCD}$) in a communication system (10, A-D) having a first node (A), a second node (B), a third node (C) and a medium (10) jointly used by the nodes, **characterized by** the following features:

- in a first arbitration phase, the first node (A) sends (75, 95) a first bit sequence, the second node (B) sends (76, 96) a second bit sequence and the first node (A) and the second node (B) synchronously detect an effective third bit sequence, produced by virtue of the first bit sequence and the second bit sequence overlapping in places on the medium (10),
- in a second arbitration phase, the first node (A) sends the first bit sequence in a form inverted in places, the second node (B) sends the second bit sequence in a form inverted in places and the first node (A) and the second node (B) synchronously detect an effective fourth bit sequence, produced by virtue of the inverted first bit sequence and the inverted second bit sequence overlapping,
- the first node (A) and the second node (B) dis-junctively combine the third bit sequence with the fourth bit sequence in places to produce a fifth bit sequence, and
- the first node (A) and the second node (B) ascertain a first secret ($K_{AB}$) by virtue of the first node (A) deleting bits of the first bit sequence and the second node (B) deleting corresponding bits of the second bit sequence that are concordant in terms of digit value according to the fifth bit sequence.

**2.** Method according to Claim 1,
**characterized by** the following features:

- the first node (A) generates the shared secret ($K_{ABCD}$),
- the first node (A) codes (25, 45) the shared secret ($K_{ABCD}$) using the first secret and sends the coded (25, 45) shared secret ($K_{ABCD}$) to the second node (B), and
- the second node (B) decodes the shared secret ($K_{ABCD}$) using the first secret ($K_{AB}$) •

**3.** Method according to Claim 2,
**characterized by** at least one of the following features:

- the shared secret ($K_{ABCD}$) is coded (25, 45) and decoded using the first secret ($K_{AB}$) by means of a symmetrical encryption method (25), or
- the shared secret ($K_{ABCD}$) is coded (25, 45) and decoded by virtue of the shared secret ($K_{ABCD}$) being antivalently combined (45) with the first secret ($K_{AB}$) .

**4.** Method according to Claim 2 or 3,
**characterized by** the following features:

- the first node (A) and the third node (C) accordingly ascertain a second secret ($KA_C$),
- the first node (A) further codes (26, 46) the shared secret ($K_{ABCD}$) using the second secret ($K_{AC}$) and sends the coded (26, 46) shared secret ($K_{ABCD}$) to the third node (C), and
- the third node (C) decodes the shared secret ($K_{ABCD}$) using the second secret ($K_{AC}$) .

**5.** Method according to Claim 2 or 3,
**characterized by** the following features:

- the second node (B) and the third node (C) accordingly ascertain a second secret ($K_{BC}$),
- the second node (B) recodes the shared secret ($K_{ABCD}$) decoded using the first secret ($K_{AB}$) using the second secret ($K_{BC}$) and sends the coded shared secret ($K_{ABCD}$) to the third node (C), and
- the third node (C) decodes the group key ($K_{ABCD}$) using the second secret ($K_{BC}$).

**6.** Method according to Claim 1,
**characterized by** the following features:

- the first node (A) randomly determines the first bit sequence,
- the second bit sequence is an output value ($K_{ini}$) previously known to the second node (B) and the third node (C),
- the third node (C) detects the third bit sequence and the fourth bit sequence in sync with the first node (A) and the second node (B), combines said bit sequences, for its part, to produce the fifth bit sequence and ascertains the first secret ($K_{AB}$) by deleting applicable bits of the second bit sequence that are concordant in terms of digit value according to the fifth bit sequence, and
- the first node (A), the second node (B) and the third node (C) use the first secret ($K_{AB}$) as shared secret ($K_{ABCD}$).

**7.** Method according to Claim 6,
**characterized by** the following feature:

- the third node (C) also sends (77) the second bit sequence.

**8.** Computer program configured to carry out the method according to one of Claims 1 to 7.

**9.** Machine-readable storage medium on which the computer program according to Claim 8 is stored.

**10.** Apparatus (A, B, C, D) configured to carry out the method according to one of Claims 1 to 7.


**Revendications**

**1.** Procédé d'établissement d'un secret commun ($K_{ABCD}$) dans un système de communication (10, A - D) comprenant un premier noeud (A), un deuxième noeud (B), un troisième noeud (C) et un support (10) utilisé en commun par les noeuds,
**caractérisé par** les particularités suivantes :

- dans une première phase d'arbitrage (75, 95), le premier noeud (A) envoie (76, 96) une première séquence de bits, le deuxième noeud (B) une deuxième séquence de bits et le premier noeud (A) et le deuxième noeud (B) détectent de manière synchrone une troisième séquence de bits effective à laquelle la première séquence de bits et la deuxième séquence de bits se superposent localement sur le support (10),
- dans une deuxième phase d'arbitrage, le premier noeud (A) envoie la première séquence de bits de manière localement inversée, le deuxième noeud (B) envoie la deuxième séquence de bits de manière localement inversée, et le premier noeud (A) et le deuxième noeud (B) détectent de manière synchrone une quatrième séquence de bits effective à laquelle la première séquence de bits inversée et la deuxième séquence de bits inversée se superposent,
- le premier noeud (A) et le deuxième noeud (B) combinent la troisième séquence de bits de manière localement disjonctive à la quatrième séquence de bits pour obtenir une cinquième séquence de bits et
- le premier noeud (A) et le deuxième noeud (B) déterminent un premier secret ($K_{AB}$) en ce que le premier noeud (A) supprime des bits de la première séquence de bits et le deuxième noeud (B) supprime des bits correspondants de la deuxième chaîne de bits, lesquels concordent numériquement selon la cinquième séquence de bits.

**2.** Procédé selon la revendication 1,
**caractérisé par** les particularités suivantes :

- le premier noeud (A) génère le secret commun ($K_{ABCD}$) ,
- le premier noeud (A) code (25, 45) le secret commun ($K_{ABCD}$) avec le premier secret et envoie le secret commun ($K_{ABCD}$) codé (25, 45) au deuxième noeud (B) et
- le deuxième noeud (B) décode le secret commun ($K_{ABCD}$) avec le premier secret ($K_{AB}$) .

**3.** Procédé selon la revendication 2,
   **caractérisé par** au moins une des particularités suivantes :

   - le secret commun (K$_{ABCD}$) est codé et décodé par un procédé de chiffrement symétrique (25) avec le premier secret (*K*$_{AB}$) (25, 45) ou
   - le secret commun (K$_{ABCD}$) est codé (25, 45) et décodé par une combinaison OU-exclusif (45) du secret commun (K$_{ABCD}$) avec le premier secret (K$_{AB}$) .

**4.** Procédé selon la revendication 2 ou 3,
   **caractérisé par** les particularités suivantes :

   - le premier noeud (A) et le troisième noeud (C) déterminent un deuxième secret (K$_{AC}$) de manière correspondante,
   - le premier noeud (A) code (26, 46) en outre le secret commun (K$_{ABCD}$) avec le deuxième secret (K$_{AC}$) et envoie le secret commun (K$_{ABCD}$) codé (26, 46) au troisième noeud (C) et
   - le troisième noeud (C) décode le secret commun (K$_{ABCD}$) avec le deuxième secret (K$_{AC}$).

**5.** Procédé selon la revendication 2 ou 3,
   **caractérisé par** les particularités suivantes :

   - le deuxième noeud (B) et le troisième noeud (C) déterminent de manière correspondante un deuxième secret (K$_{BC}$),
   - le deuxième noeud (B) code le secret commun (K$_{ABCD}$) décodé avec le premier secret (K$_{AB}$) à nouveau avec le deuxième secret (K$_{BC}$) et envoie le secret commun (K$_{ABCD}$) codé au troisième noeud (C) et
   - le troisième noeud (C) décode la clé de groupe (K$_{ABCD}$) avec le deuxième secret (K$_{BC}$) .

**6.** Procédé selon la revendication 1,
   **caractérisé par** les particularités suivantes :

   - le premier noeud (A) détermine de manière aléatoire la première séquence de bits,
   - la deuxième séquence de bits représente une valeur initiale (K$_{ini}$) déjà connue du deuxième noeud (B) et du troisième noeud (C),
   - le troisième noeud (C) détecte, de manière synchrone avec le premier noeud (A) et le deuxième noeud (B), la troisième séquence de bits et la quatrième séquence de bits, combinent celles-ci de son côté pour obtenir la cinquième séquence de bits et détermine le premier secret (*K*$_{AB}$) en supprimant les bits correspondants de la deuxième séquence de bits qui concordent numériquement selon la cinquième séquence de bits, et
   - le premier noeud (A), le deuxième noeud (B) et le troisième noeud (C) utilisent le premier secret (K$_{AB}$) comme secret commun (K$_{ABCD}$) .

**7.** Procédé selon la revendication 6,
   **caractérisé par** la particularité suivante :

   - le troisième noeud (C) également envoie (77) la deuxième séquence de bits.

**8.** Programme informatique conçu pour mettre en oeuvre le procédé selon l'une des revendications 1 à 7.

**9.** Support de mémorisation lisible par machine sur lequel est mémorisé le programme informatique selon la revendication 8.

**10.** Dispositif (A, B, C, D) adapté pour mettre en oeuvre le procédé selon l'une des revendications 1 à 7.

# FIG. 1

# FIG. 2

FIG. 3

FIG. 4

# FIG. 5

EP 3 363 144 B1

FIG. 6

FIG. 7

# FIG. 8

# FIG. 9

EP 3 363 144 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012215326 A1